# DEMANDE DE BREVET EUROPEEN

(11) **EP 2 164 011 A1**
(43) Date de publication de la demande: **17.03.2010**
(21) Numéro de dépôt: 09180501.0
(22) Date de dépôt: 21.06.2007
(51) Int. Cl.: G06F 17/30

(54) **Procédé de restitution optimisé du rendu d'une scène multimédia comprenant au moins un objet actif, sans modification préalable de la sémantique et/ou du format de description de scène**

(30) Priorité: 21.06.2006 FR 0605563
(62) Demande divisionnaire de: 07786797.6
(71) Demandeur: Streamezzo, 75016 Paris (FR)
(72) Inventeur: Dufourd, Jean-Claude, 94270, Le Kremlin Bicetre (FR); Perron, Julien, 35000, Rennes (FR); Pierre, Nicolas, 35220, Marpire (FR)
(74) Mandataire: Bioret, Ludovic

(57) **Abrégé**

L'invention concerne un procédé de restitution d'au moins une scène multimédia sur un terminal de radiocommunication mobile, ladite scène multimédia comprenant une pluralité d'objets multimédia organisés sous la forme d'au moins un arbre de description de scène.

Selon l'invention, le procédé comprend les étapes suivantes :
- distribution desdits objets entre deux sous-arbres, un sous-arbre des objets à restituer, comprenant des objets destinés à être restitués à un instant donné, et un sous-arbre d'attente, comprenant des objets destinés à ne pas être restitués audit un instant donné ;
- transfert d'au moins un desdits objets d'un premier desdits sous-arbres au second desdits sous-arbres en fonction d'au moins une condition de transfert prédéterminée ;
- reconstruction de ladite scène à un instant donné, utilisant uniquement les objets présents dans ledit sous-arbre des objets à restituer.

## Description

### 1. Domaine de l'invention

Le domaine de l'invention concerne la présentation de contenus multimédia sur un terminal de radiocommunication, par exemple un terminal de radiocommunication mobile, un PDA (en anglais « Personal Digital Assistant », en français « assistant numérique personnel »), ordinateur portable, etc.

Plus précisément, l'invention concerne la restitution sur un tel terminal de contenus se présentant sous la forme de scènes multimédias composées d'une pluralité d'objets multimédia, par exemple des objets graphiques, sonores, etc. et bénéficiant ou pas de fonctionnalités d'interaction.

L'invention s'applique notamment, mais non exclusivement à des descriptions de scènes au format SVG (pour « Scalable Vector Graphics » en anglais ou « graphiques vectoriels adaptables » en français), ou de format basé sur SVG comme MPEG LASeR, ou plus généralement à des descriptions de scènes au format XML permettant d'utiliser, notamment et non exclusivement une interface de programmation DOM (pour « Document Object Model » en anglais, ou « Modèle Objet de document » en français).

On rappelle ici qu'on entend par contenu multimédia un ensemble composé d'au moins une scène graphique animée, encore appelée scène multimédia, et d'une série de commandes permettant de faire évoluer cette scène d'un état à un autre.

Une scène multimédia correspond notamment à l'agencement d'un ensemble d'objets graphiques dans le temps et dans l'espace, avec lesquels l'utilisateur du terminal de radiocommunication peut interagir.

L'invention trouve des applications dans tous les domaines nécessitant une représentation des signaux sous forme d'un agencement spatio-temporel d'objets graphiques, avec interactivité.

L'invention s'applique en particulier aux formats de description de scènes graphiques déjà connus tels que le SVG (en anglais « Scalable Vector Graphics », en français « graphiques vectoriels adaptables »), le SMIL (en anglais « Synchronized Multimedia Integration Language », en français « langage d'intégration multimédia synchronisés »), le XHTML (en anglais «eXtensible HyperText Markup Language », en français « langage de balisage hypertexte extensible »), etc.

### 2. Art antérieur

Dans le format SVG, des éléments dits «graphiques» ont une représentation visuelle (ou assimilés, comme l'élément audio), alors que d'autres éléments ne bénéficient d'aucune représentation visuelle, mais possèdent uniquement une activité liée des interactions avec d'autres éléments, ou bien encore, liée au déroulement de l'animation d'autres éléments d'une même scène multimédia.

Dans la description de scènes multimédia destinées à être exécutées sur un terminal donné, il peut s'avérer intéressant, dans certains contextes, d'avoir la possibilité ou le choix que tout ou partie des objets multimédia d'une scène soient ou non restitués et/ou joués sur une interface du terminal.

A titre d'exemple illustratif, il est connu du format de description de scènes multimédia l'attribut d'objet multimédia « display », qui permet de « faire comme si » un élément ou un groupe d'éléments était retiré d'une scène multimédia, au moment de la restitution de cette dernière sur un terminal.

Ainsi, au moyen de cet attribut spécifique au format SVG, il est possible pour un objet ou élément multimédia d'une scène multimédia :
- de faire comme si l'élément portant l'attribut « display » n'était plus dans la scène (display='none') ;
- de faire comme si l'élément portant l'attribut « display » était de nouveau dans la scène (« display » est affecté d'une toute autre valeur que la valeur 'none')
- de passer de l'un à l'autre en animant cet attribut « display ».

Un premier inconvénient de l'attribut « display » est qu'il est spécifique du format de description de scène multimédia SVG.

Un deuxième inconvénient de cet attribut « display » est lié au fait qu'il s'applique exclusivement aux éléments graphiques. L'attribut « display » ne s'applique donc pas aux éléments non graphiques actifs, comme les animations SMIL, les objets du type écoutant d'autres objets de la scène (objets « listeners » par exemple), ou bien encore les objet du type scripts.

De plus, lorsque une scène multimédia, décrite dans la grande majorité des cas sous la forme d'un arbre de description de scène, encore appelé arbre de scène, contient aussi bien d'éléments ou objets actifs que des éléments ou objets graphiques, il est bien connu de l'art antérieur que le moteur de rendu du terminal est obligé de balayer la totalité de l'arbre de scène, que les objets/ éléments graphiques soient affichés ou pas. Une telle contrainte est pourtant nécessaire pour que le moteur de rendu du terminal puisse être capable de traduire correctement l'activité des éléments graphiques de la scène multimédia.

Or, il est bien connu, notamment pour ce qui concerne l'implémentation et la restitution sur des terminaux de radiocommunication de scènes multimédia par programme écrit en langage JAVA (marque déposée), que le parcours de l'arbre de description de scène occupe une part importante du temps de rendu et altère la qualité de service offerte à l'utilisateur.

Ces inconvénients existent dans tous les formats de description de scènes multimédia formées d'un assemblage d'objets multimédia de différentes catégories, dont certains peuvent être rendus ou non selon un paramètre (par exemple le paramètre « display » dans l'exemple du format SVG) et qui cohabitent avec des objets actifs dont l'activité intrinsèque est indépendante du fait qu'ils soient rendus ou pas.

A titre d'exemple illustratif et non limitatif, les formats de description de scène multimédia SVG, LASeR et SMIL, tombent dans cette catégorie. En particulier, la compatibilité SVG de l'ensemble de la scène restante à restituer est mise en danger si le choix est fait de ne pas traiter tous les enfants d'un objet SVG dont l'attribut « display » possède la valeur « none » .

### 3. Objectifs de l'invention

L'invention a notamment pour objectif de pallier ces inconvénients de l'art antérieur.

Plus précisément, un des objectifs de l'invention est de disposer un mécanisme permettant simplement de choisir ou de sélectionner un ou plusieurs objets (voir une branche complète) de l'arbre de description de scène qui ne doivent pas être restitués sur le terminal d'un utilisateur, sans avoir à modifier les règles de rendu spécifiques au format de description choisi pour la scène.

Un autre objectif de l'invention est de mettre en oeuvre une telle technique permettant de réduire les temps de rendu des scènes par rapport aux techniques de l'art antérieur.

Encore un autre objectif de l'invention est de fournir une telle technique permettant la réalisation de terminaux multimédia simples et peu coûteux, ne nécessitant pas de moyens de traitement importants, ni de gros moyens de mémorisation des données.

### 4. Exposé de l'invention

Ces objectifs, ainsi que d'autres qui apparaîtront par la suite, sont atteints selon l'invention à l'aide d'un procédé de restitution d'au moins une scène multimédia sur un terminal de radiocommunication mobile, ladite scène multimédia comprenant une pluralité d'objets multimédia organisés sous la forme d'au moins un arbre de description de scène.

Selon l'invention, un tel procédé comprend les étapes suivantes :
- distribution desdits objets entre deux sous-arbres, un sous-arbre des objets à restituer, comprenant des objets destinés à être restitués à un instant donné, et un sous-arbre d'attente, comprenant des objets destinés à ne pas être restitués audit un instant donné ;
- transfert d'au moins un desdits objets d'un premier desdits sous-arbres au second desdits sous-arbres en fonction d'au moins une condition de transfert prédéterminée ;
- reconstruction de ladite scène à un instant donné, utilisant uniquement les objets présents dans ledit sous-arbre des objets à restituer.

Ainsi, lors de la restitution, les objets de la scène sont distribués entre deux sous-arbres, permettant de savoir ensuite lesquels de ces objets sont à restituer à un instant donné.

De plus, en fonction des évolutions de la scène, certains objets peuvent être transférés d'un sous-arbre à un autre.

Enfin, la scène multimédia est reconstruite pour être restituée, en n'utilisant que les objets présents dans le sous-arbre des objets à restituer.

Avantageusement, le procédé de restitution selon l'invention comprend une étape de contrôle de la présence dans ledit sous-arbre des objets à restituer d'au moins un premier objet nécessaire à la restitution d'un second objet devant être transféré dudit sous-arbre d'attente audit sous-arbre des objets à restituer.

Ainsi, avant de restituer un objet, on peut s'assurer que ces ascendants ne sont pas dans l'arbre d'attente, et que la restitution de l'objet en question est possible.

Ladite étape de distribution comprend une étape de lecture d'une première étiquette, pour chacun desdits objets, pouvant prendre une première valeur si l'objet doit être placé dans ledit sous-arbre des objets à restituer, et une seconde valeur, si l'objet doit être placé dans ledit sous-arbre d'attente.

Ladite étape de contrôle comprend une étape de lecture d'une deuxième étiquette de localisation, pouvant prendre une première valeur si au moins un des ascendants dudit objet est placé dans ledit sous-arbre d'attente.

Avantageusement, ladite étape de transfert comprend une étape de détection d'un événement générateur appartenant au groupe comprenant :
- un instant ou un délai prédéterminé ;
- une action effectuée par un utilisateur ;
- une commande envoyée par un serveur ;
- un événement lié au fonctionnement dudit terminal,
ou une combinaison de ces événements.

L'invention concerne également un terminal de radiocommunication mobile apte à restituer une scène multimédia, ladite scène multimédia comprenant une pluralité d'objets multimédia organisés sous la forme d'au moins un arbre de description de scène.

Selon l'invention, un tel terminal comprend :
- des moyens de distribution desdits objets entre deux sous-arbres, un sous-arbre des objets à restituer, comprenant des objets destinés à être restitués à un instant donné, et un sous-arbre d'attente, comprenant des objets destinés à ne pas être restitués audit un instant donné ;
- des moyens de transfert d'au moins un desdits objets d'un premier desdits sous-arbres au second desdits sous-arbres en fonction d'au moins une condition de transfert prédéterminée ;
- des moyens de reconstruction de ladite scène à un instant donné, utilisant uniquement les objets présents dans ledit sous-arbre des objets à restituer.

Un tel terminal est notamment apte à mettre en oeuvre les étapes du procédé de restitution décrit précédemment.

L'invention concerne encore un produit programme d'ordinateur téléchargeable depuis un réseau de communication et/ou stocké sur un support lisible par ordinateur et/ou exécutable par un microprocesseur.

Un tel programme d'ordinateur comprend avantageusement des instructions de code de programme pour la mise en oeuvre des étapes du procédé précité de restitution d'au moins une scène multimédia destinée à être restituée sur un terminal de radiocommunication mobile, ladite scène multimédia comprenant une pluralité d'objets multimédia organisés sous la forme d'au moins un arbre de description de scène.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un exemple de mise en oeuvre d'un procédé de création;
- la figure 2 illustre un exemple de mise en oeuvre du procédé de restitution selon un mode de réalisation particulier de l'invention ;
- la figure 3 présente les principales étapes d'un procédé de création ;
- la figure 4 présente les principales étapes du procédé de restitution selon l'invention ;
- la figure 5 illustre un exemple d'application du procédé de restitution selon un mode de réalisation de l'invention;
- la figure 6 présente un exemple de signal.

### 6. Description détaillé d'un mode de réalisation de l'invention

### 6.1 Principe général

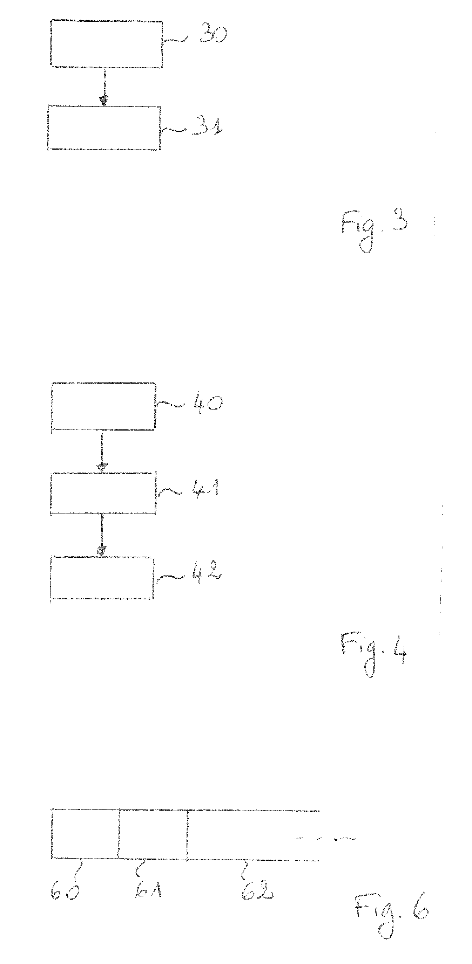

La figure 4 illustre les principales étapes du procédé de restitution d'une scène multimédia créée selon un procédé de création décrit ci-dessous.

Lors de la restitution, les objets de l'arbre de description de la scène sont d'abord distribués entre deux sous-arbres (sous-arbre des objets à restituer et sous-arbre d'attente), lors d'une étape 40 de distribution. La scène initiale est donc construite avec les objets présents dans le sous-arbre des objets à restituer, les objets du sous-arbre d'attente étant ignorés. Lors d'une étape 41 de transfert, certains objets sont transférés d'un arbre à l'autre. Cette étape de transfert est activée en fonction d'événements prédéterminés intervenant lors de la restitution.

Enfin, l'étape 42 de reconstruction consiste à reconstruire et à restituer la scène multimédia à un instant donné, en n'utilisant que les objets présents dans le sous-arbre des objets à restituer.

Le principe général de l'invention repose sur la création de deux sous-arbres pour décrire une scène multimédia, un sous-arbre comprenant des objets destinés à être restitués à un instant donné, et un sous-arbre comprenant des objets destinés à ne pas être restitués à cet instant donné, et sur la possibilité de transférer un objet d'un sous-arbre à un autre, en fonction d'événements intervenant au cours de la restitution de la scène multimédia.

On présente, en relation avec la figure 3, les principales étapes d'un procédé de création d'une scène multimédia destinée à être restituée par le procédé de restitution selon un mode de réalisation de l'invention décrit ci-dessus.

On considère une scène multimédia décrite sous la forme d'un arbre de description de scène.

La première étape 30 d'association consiste, selon l'invention, à associer à cet arbre de description de scène deux sous-arbres :
- un sous-arbre des objets à restituer,
- un sous-arbre d'attente.

Selon les cas, ces sous-arbres peuvent être indépendants l'un de l'autre, ou dépendre de l'arbre de description de scène.Ensuite, lors d'une étape 31 d'identification mise en oeuvre pendant la création, ou la programmation, de la scène, on identifie au moins un objet pouvant être transféré d'un sous-arbre à l'autre, et au moins un événement prédéterminé pouvant se produire lors de la restitution de la scène en question, et provoquant un tel transfert.

### 6.2 Exemple de mise en oeuvre du procédé de restitution

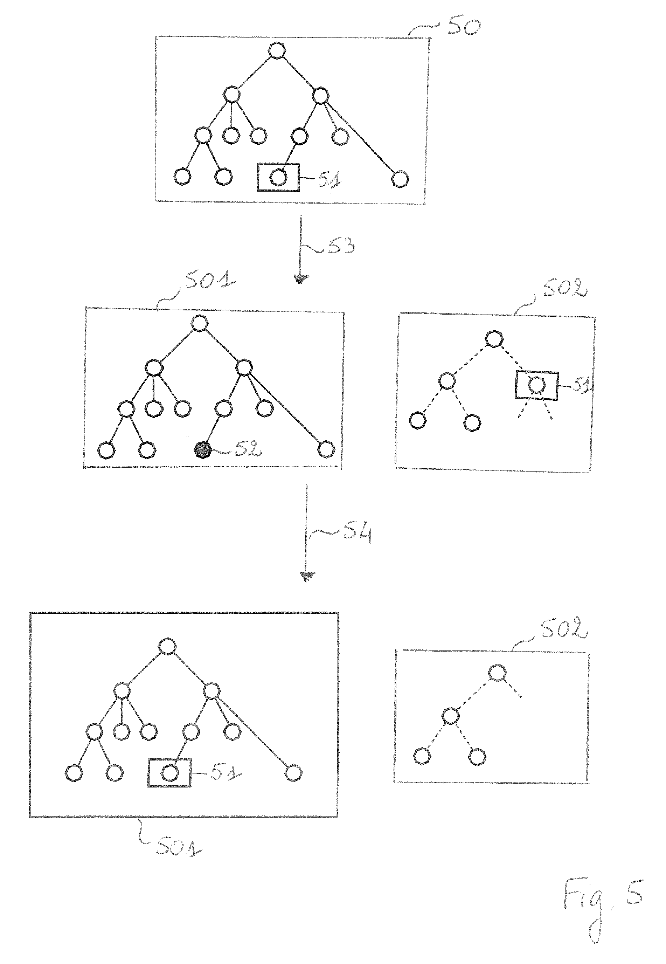

Un exemple d'évolution de l'arbre de description de scène et des sous-arbres des objets à restituer et d'attente selon une mise en oeuvre du procédé de restitution selon l'invention est illustré avec la figure 5.

L'arbre de description de la scène 50 comprend en particulier un objet 51, destiné à ne pas être restitué à partir d'un instant donné t1 de la restitution de la scène, correspondant au déclenchement d'un événement 53, et ce même objet 51 est destiné à être à nouveau restitué à partir d'un instant donné t2, correspondant au déclenchement d'un événement 54.

L'événement 53 peut être par exemple une action de l'utilisateur activant un onglet dans une première page contenant l'objet 51, afin d'afficher une deuxième page correspondant à cet onglet. Ainsi, l'objet 51 ne doit donc plus être restitué car il appartient à la première page qui n'est plus affichée.

L'événement 54 peut être par exemple la fin de la période d'affichage de la deuxième page, qui n'est affichée que 10 secondes, pour laisser ensuite à nouveau la première page s'afficher. Dans ce cas, l'objet 51 doit à nouveau être restitué.

On observe donc sur la figure 5 qu'au moment du déclenchement de l'événement 53, l'objet 51 a été remplacé par l'objet fantôme 52 dans le sous-arbre 501 des objet à restituer, alors que l'objet 51 a été inséré dans le sous-arbre d'attente 502.

Au moment du déclenchement de l'événement 54, l'objet 51 retrouve sa place dans le sous-arbre des objets à restituer 501, alors qu'il a été retiré du sous-arbre d'attente 502.

On présente également, en relation avec la figure 6, un exemple de signal de description d'une scène multimédia selon l'invention pour un objet transférable selon l'invention.

Le signal correspondant à cet objet transférable porte des données 62, une première étiquette 60 d'identification, pouvant prendre une première valeur si l'objet doit être placé dans ledit sous-arbre des objets à restituer, et une seconde valeur, si l'objet doit être placé dans ledit sous-arbre d'attente, et une deuxième étiquette 61, pouvant prendre une première valeur si au moins un des ascendants dudit objet est placé dans ledit sous-arbre d'attente.

### 6.3 Exemples de réalisation

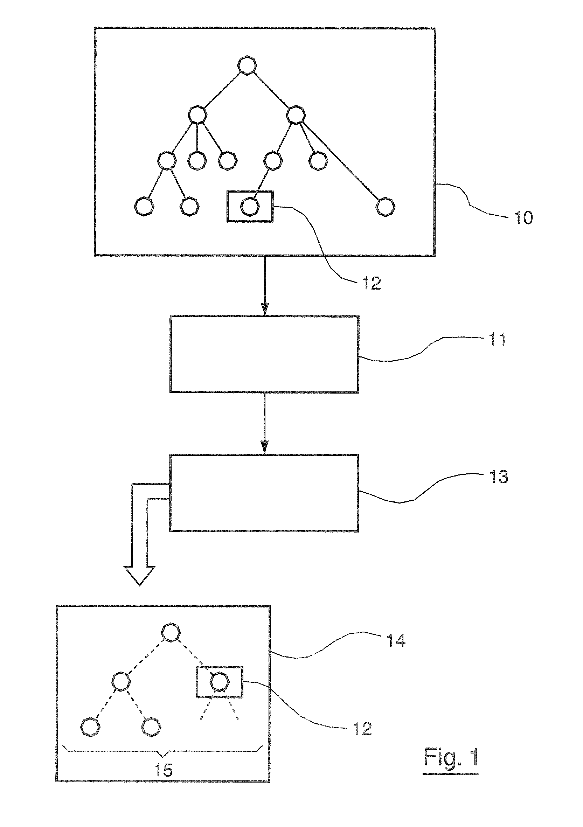

Comme illustré sur la figure 1, un exemple d'un procédé de création comprend avantageusement une étape 11 de sélection dans ledit arbre 10 de description de scène d'au moins un objet 12 multimédia que le moteur de rendu ne doit pas restituer, et une étape 13 d'insertion dudit au moins un objet 12 multimédia sélectionné dans un arbre 14 auxiliaire, dit arbre d'attente, contenant l'ensemble 15 des objets multimédia dudit arbre 10 de scène que le moteur de rendu dudit terminal ne doit pas restituer.

Préférentiellement, ladite étape 11 de sélection est une étape d'affectation audit au moins un objet multimédia d'au moins une étiquette d'indication que ce dernier doit être inséré dans ledit arbre d'attente et ne doit pas être restitué sur ledit terminal.

De façon avantageuse, ladite étape d'insertion comprend :
- une sous-étape de retrait dans ledit arbre de description de scène, dudit au moins un objet multimédia sélectionné, dit objet initial ; et
- une sous-étape d'affectation dans ledit arbre de description de scène, à l'endroit initialement occupé par ledit objet retiré, d'un objet inactif dit objet « fantôme ».

De façon préférentielle, ledit objet « fantôme » est vu par le moteur de rendu comme un objet neutre ne nécessitant aucune restitution sur ledit terminal et, comprend un identifiant unique obtenu par application d'une fonction bijective distincte de la fonction identité, à l'identifiant unique dudit objet initial, de façon à maintenir une unicité entre l'identifiant unique dudit objet initial inséré dans ledit arbre d'attente et l'identifiant unique dudit objet « fantôme » insérée à la place dudit objet initial dans ledit arbre de description de scène.

Avantageusement, le procédé de création selon l'invention met en oeuvre au moins une première commande de mise à jour de la valeur de l'étiquette d'au moins un objet multimédia appartenant audit arbre de description de scène, pour indiquer si ledit objet doit être inséré dans ledit arbre d'attente et retiré dudit arbre de description de scène, et au moins une deuxième commande de mise à jour de la valeur de l'étiquette d'au moins un objet multimédia appartenant audit arbre d'attente, pour indiquer son retrait dudit arbre auxiliaire et son retour à son emplacement initial dans ledit arbre de description de scène.

Dans un mode de réalisation préféré de l'invention, l'arbre 10 de description de scène et l'arbre 14 d'attente étant deux arbres physiquement créés et indépendants l'un de l'autre, ledit au moins un objet sélectionné à ladite étape de sélection est transféré physiquement dudit arbre de description de scène vers ledit arbre d'attente, à ladite étape d'insertion.

Dans une variante avantageuse de l'invention, l'arbre 10 de description de scène étant un arbre créé physiquement et l'arbre 14 d'attente étant un arbre virtuel créé à partir dudit arbre de description de scène, ledit au moins un objet sélectionné à ladite étape de sélection est affecté d'au moins une deuxième étiquette de valeur indiquant qu'il est élément dudit arbre d'attente virtuel, de façon qu'il ne soit pas être restitué sur ledit terminal par le moteur de rendu de ce dernier.

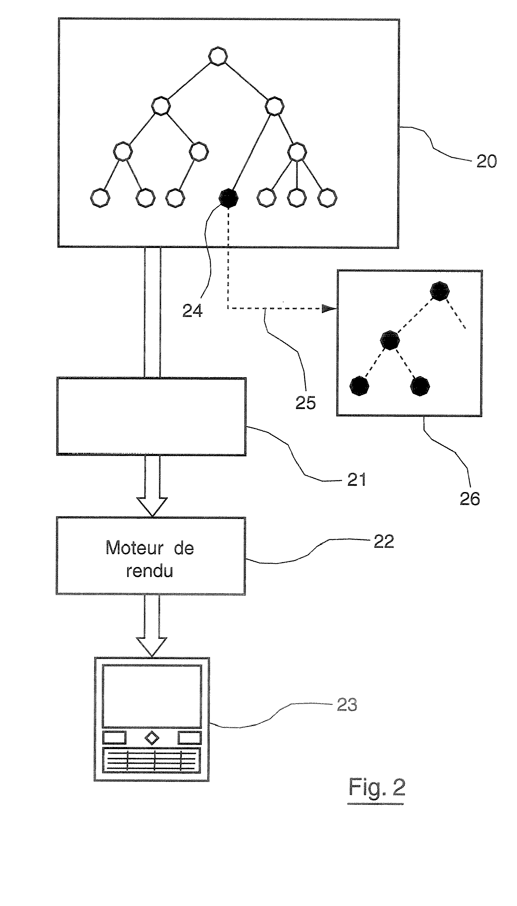

Selon l'invention et comme illustré sur la figure 2, un exemple du procédé de restitution comprend avantageusement une étape 21 de lecture pour chacun desdits objets dudit arbre 20 de scène, d'au moins une étiquette destinée à indiquer audit moteur 22 de rendu dudit terminal 23 si l'objet 24 considéré doit être restitué sur ledit terminal 23 ou être inséré 25 dans un arbre 26 auxiliaire, dit arbre d'attente, et ne pas être restitué sur ledit terminal 23.

Préférentiellement, ledit arbre de description de scène étant un arbre créé physiquement et ledit arbre d'attente étant un arbre virtuel créé à partir dudit arbre de description de scène, ledit procédé met en oeuvre une étape supplémentaire de lecture d'au moins une deuxième étiquette affectée à chacune desdits objets multimédia, ladite deuxième étiquette indiquant si un objet considéré de ladite scène doit être restitué ou s'il est élément dudit arbre d'attente virtuel et ne doit pas être restitué sur ledit terminal par le moteur de rendu.

Un exemple de mode de réalisation de l'invention est donné ici en s'appuyant (de façon non exclusive mais simplement illustrative) sur l'utilisation d'une interface de programmation DOM (pour « Document Object Model » en anglais, ou « modèle objet de document » en français).

Un arbre DOM auxiliaire, dit arbre d'attente dans lequel sont placés des objets retirés temporairement de l'arbre de description de scène est mis en oeuvre.

Dans cette exemple de réalisation, les objets multimédia ou les branches composées d'une pluralités d'objets multimédia sont retirés de l'arbre de scène par une opération selon l'instruction « removeChild » et insérés dans l'arbre d'attente par une opération du type « insertChild ».

Dans une variante possible, les objets ou branches sont retirés de l'arbre de scène par une opération « replaceChild », et donc remplacés par un objet « fantôme », insensible au rendu et inactif.

Ainsi, les objets ou branches de l'arbre d'attente, vu qu'ils ne font plus partie de la scène, n'ont plus aucune activité et ne sont pas restitués sur le terminal.

Le processus de rendu, au lieu de d'arriver sur les objets retirés, arrive dans l'arbre de description de scène, non plus sur l'objet initial actif, mais désormais sur un objet « fantôme » inactif, et la question de procéder à une exploration de la branche retirée ne se pose donc plus, permet avantageusement de faire des économie en termes de puissance et de temps de calcul au niveau du terminal.

De plus, la sémantique des objets du format de description de scène n'est pas modifiée de même que leur mode de rendu.

L'invention exploite un mécanisme indépendant de la scène pour offrir un service ou permettre des optimisations.

Les objets de l'arbre de description de scène ou les objets de l'arbre d'attente (ou auxiliaire) continuent quant à eux d'être accessibles par les mêmes mécanismes qu'auparavant.

En particulier, les identifiants doivent rester uniques entre les deux arbres, pour éviter tout ambiguïté dans les accès.

Les implémentations peuvent soit contenir deux arbres totalement séparés, soit utiliser une forme d'arbre étendue de manière à simuler le comportement décrit ci-dessus sans avoir à créer deux arbres séparés.

Il y a au moins deux manières de formuler ce type de service en tant qu'extension de la description de scène :
- sous forme de commande de mise à jour
- sous forme d'attribut

Sous la forme de commande de mise à jour, on peut supposer que la description de scène offre déjà un service de mise à jour de scène accessible par l'intermédiaire de commandes d'insertion d'objet multimédia, de destruction et de modification d'éléments ou d'attributs.

Dans le cas d'un format de description de scène du type MPEG LASeR, les commandes suivantes sont définies :
- « Hide » : c'est une commande qui prend une branche de l'arbre de description de scène désignée par l'identifiant de la racine de la branche, et qui permet de transférer la branche complète d'objet multimédia dans l'arbre d'attente. En contrepartie de l'application de cette commande, en lieu et place de la racine de la branche, un objet « fantôme » est placé pour être capable de facilement retrouver l'endroit d'ancrage de la branche, même si d'autres modifications de l'arbre de scène sont faites autour de ce point d'ancrage.
- « Show » : c'est une commande qui prend une branche dans l'arbre d'attente, aussi désignée par l'identifiant de la racine de la branche, et remplace l'objet « fantôme » placé à l'ancien point d'ancrage de la branche dans l'arbre de description de scène.
- « InsertHidden » : il s'agit d'une commande permettant de créer des objets à l'avance, mais sans les insérer directement dans l'arbre de description de scènes. C'est un clone de la commande « Insert » qui ajoute une branche dans l'arbre de scène à un endroit particulier : la différence est que « InsertHidden » est l'équivalent des deux commandes successives « Insert » puis « Hide » sur le même objet.

Plutôt que de créer une extension sous la forme de commande de mise à jour, on peut aussi définir un attribut nommé ici « host », qui peut prendre deux valeurs, à savoir « scene » ou « aux ». Cet attribut est placé en tant qu'extension externe au langage de description de scène (dans un autre « namespace » (ou espace de nom) en jargon XML) sur tous les types d'objets du format de description de scène. L'attribut a pour valeur par défaut « scene ».

Quand la valeur de l'attribut est « aux », l'objet multimédia qui porte l'attribut est placé dans l'arbre d'attente, ainsi que tous ses enfants, et l'objet multimédia est remplacé dans l'arbre de description de scène un objet fantôme, neutre en termes de rendu sur le terminal une fois interprété par le moteur de rendu.

Quand la valeur de l'attribut est « scene » (et qu'il en est de même sur tous ses ancêtres jusqu'à la racine), l'élément qui porte l'attribut est placé dans l'arbre de scène.

Dans cette variante, tout élément est par défaut inséré dans l'arbre de scène. Si un élément est inséré avec « host = aux », alors la situation résultante est la même que celle qui résulte de l'exécution de l'instruction « InsertHidden » dans la variante précédente.

Quand la valeur de l'attribut « host » est changée de « scene » à « aux », alors la situation résultante est la même que celle qui résulte de l'exécution de l'instruction « Hide » dans la variante précédente.

Quand la valeur de l'attribut host est changée de « aux » à « scene », alors la situation résultante est la même que celle qui résulte de l'exécution de l'instruction « Show » dans la variante précédente.

Il est important de montrer que le mécanisme de « lsr:host » ou « Show/Hide/InsertHidden » est :
- indépendant du vocabulaire : ça marche aussi bien sur des descriptions utilisant les format de description de scène SMIL, xHTML, SVG, ou sur tout autre vocabulaire dont les éléments ont ou pas un mécanisme du type « display='none' », comme dans le format SVG ;

Dans un exemple de mode de réalisation de l'invention, on applique à LASeR l'invention pour permettre de gérer des scènes de manière plus efficace et plus simple.

Plutôt que d'utiliser l'attribut SVG « display » avec la valeur « none », ce qui ne désactive pas toute la branche dont la racine porte l'attribut « display = none », un attribut « lsr:host » avec les deux valeurs « scene » et « aux » est préféré.

Le principe d'utilisation d'un arbre d'attente est aussi conservé pour définir la sémantique de cet attribut, et ainsi obtenir une extension indépendante du vocabulaire XML, orthogonale à SVG, et compatible avec SVG, selon les termes de compatibilité des extensions à SVG.

L'attribut « lsr:host » est défini sur tous les objets LASeR, donc aussi sur les objets SVG.

La sémantique de cet attribut est : quand la valeur est « scene », l'objet multimédia de l'arbre de description de scène est considéré comme faisant partie de la scène SVG, et quand la valeur de celui-ci est « aux », cet objet est alors considéré comme faisant partie de l'arbre d'attente et non plus comme faisant partie de l'arbre de scène.

Ne faisant plus partie de l'arbre de scène, l'objet n'est alors plus régi par les règles de rendu SVG.

Pour compléter l'ajout de cet attribut, il faut modifier la sémantique des commandes de mise à jour de la scène.

Dans chaque commande de mise à jour, il y a un identifiant désignant l'objet auquel s'appliquera la commande.

En l'absence de l'invention, lors de l'exécution de la commande, une recherche d'objet par son identifiant unique est faite dans l'arbre de description de scène seulement.

Les commandes de mise à jour sont alors étendues pour s'appliquer à l'objet multimédia dont l'identifiant est mentionné dans la commande, que cet objet se trouve dans l'arbre de scène ou dans l'arbre d'attente.

Lorsque la valeur de l'attribut « lsr:host » est « scene » pour un objet multimédia donné, cet objet est alors réputé appartenir à l'arbre de description de scène.

On résume les étapes principale de ce procédé selon l'invention de la façon suivante :
- Etape 1 : Une commande de mise à jour vient changer cette valeur en « aux ».
- Etape 2 : L'objet est maintenant réputé appartenir à l'arbre d'attente.
- Etape 3 : Une commande de mise à jour vient changer la valeur en « scene ».
- Etape 4 : L'objet est maintenant réputé de nouveau appartenir à l'arbre de description de scène, à l'endroit où il était avant le premier changement de valeur, quelles que soient les mises à jour subies par l'arbre de scène entre les étapes 2 et 3.

Dans un mode de réalisation particulier, l'implémentation de deux arbres séparés a été choisie.

Lors de l'étape 1, l'objet cible est retiré de l'arbre. Pour que sa place puisse être retrouvée quelle que soit la série de mises à jour ayant lieu entre les étapes 2 et 3, un objet fantôme est inséré à sa place.

Cet objet fantôme doit avoir deux propriétés :
- cet objet doit être neutre du point de vue du rendu. Le format SVG nous offre plusieurs choix pour cet objet fantôme : les éléments « desc », « title » et « metadata » sont ignorés par le rendu du moteur de rendu, de même que tous éléments dans un autre « namespace » (espace nom), comme « x:foo », ou même un élément groupant sans enfant. Selon le vocabulaire XML étendu, le choix du type de l'objet fantôme peut donc varier.
- cet obj et doit être marqué avec un identifiant unique que l'on puisse retrouver facilement à partir de l'identifiant de l'objet multimédia cible.
   Soit A, l'identifiant de l'objet cible, alors l'identifiant de l'objet fantôme doit être fantome(A), où fantome(x) est une fonction bijective et différente de l'identité. En effet, quand l'objet A est placé dans l'arbre d'atente (ou auxiliaire), pour que des mises à jour puissent lui être appliquée, il faut que l'unicité des identifiants entre les deux arbres soit maintenue.

Lors de l'étape 3, l'attribut « lsr:host » de l'objet A est remis à la valeur « scene ». La commande de mise à jour cherche l'objet A, d'abord dans l'arbre de scène, puis ne l'y trouvant pas, le cherche dans l'arbre d'attente. La commande change la valeur « lsr:host » et :
- l'objet d'identifieur fantome(A) est cherché dans l'arbre de scène. Il peut avoir bougé suite à des mises à jours ayant eu lieu entre l'étape 2 et 3 ;
- l'objet A est retiré de l'arbre d'attente ;
- l'objet fantome(A) est remplacé par l'objet A dans l'arbre de scène.

Ainsi, suite à des mises à jours ayant eu lieu entre l'étape 2 et 3, l'objet fantome(A) peut aussi se trouver dans l'arbre auxiliaire, si par exemple son père y a été placé. Dans ce cas, le remplacement de l'objet fantôme(A) par l'objet A a donc lieu dans l'arbre d'attente.

L'objet fantome(A) peut aussi avoir été supprimé de l'arbre de scène, si par exemple son père a été détruit. Dans ce cas, l'objet A est détruit dans l'étape 3.

Dans un autre mode de réalisation particulier, l'implémentation d'un seul arbre peut être choisie. Les deux arbres de scène et d'attente sont alors virtuels.

Dans ce cas, lors de l'étape 1, en plus du fait que son attribut « lsr:host » prend la valeur « aux », l'objet multimédia cible est marqué par une étiquette d'indication « placéDansLArbreAuxiliaire » ainsi que tous ses enfants.

S'il est déjà marqué « placéDansLArbreAuxiliaire », par exemple parce que son père a été retiré de l'arbre de scène, alors il n'y a rien d'autre à faire que de changer son attribut « lsr:host ».

Le rendu doit être modifié pour ignorer un objet marqué « placéDansLArbreAuxiliaire ».

Lors de l'étape 3, l'attribut « lsr:host » de l'objet cible est remis à « scene » et :
- si son père est marqué de l'étiquette d'indication « placéDansLArbreAuxiliaire », alors le traitement s'arrête ;
- si son père n'est pas marqué de l'étiquette d'indication « placéDansLArbreAuxiliaire», alors le marqueur « placéDansLArbreAuxiliaire » de l'objet cible est supprimé, ainsi que celui de tous ses enfants, à l'exclusion de ceux ayant l'attribut « lsr:host=aux », auquel cas l'étiquette d'indication « placéDansLArbreAuxiliaire » de cet enfant est laissé inchangée ainsi que celle de tous les enfants de cet enfant.

Dans ce mode de réalisation particulier, le fonctionnement des commandes de mises à jour autre que le remplacement de l'attribut « lsr:host » n'a pas à être modifié.

A un instant donné, tous les objets marqués par l'étiquette d'indication « placéDansLArbreAuxiliaire » sont des objets qui se retrouveraient dans l'arbre d'attente du mode de réalisation particulier précédent.

## Revendications

1. Procédé de restitution d'au moins une scène multimédia sur un terminal de radiocommunication mobile, ladite scène multimédia comprenant une pluralité d'objets multimédia organisés sous la forme d'au moins un arbre de description de scène,
**caractérisé en ce qu'**il comprend les étapes suivantes :
- distribution (40) desdits objets entre deux sous-arbres, un sous-arbre des objets à restituer, comprenant des objets destinés à être restitués à un instant donné, et un sous-arbre d'attente, comprenant des objets destinés à ne pas être restitués audit un instant donné ;
- transfert (41) d'au moins un desdits objets d'un premier desdits sous-arbres au second desdits sous-arbres en fonction d'au moins une condition de transfert prédéterminée ;
- reconstruction (42) de ladite scène à un instant donné, utilisant uniquement les objets présents dans ledit sous-arbre des objets à restituer.

2. Procédé de restitution selon la revendication 1, **caractérisé en ce qu'**il comprend une étape de contrôle de la présence dans ledit sous-arbre des objets à restituer d'au moins un premier objet nécessaire à la restitution d'un second objet devant être transféré dudit sous-arbre d'attente audit sous-arbre des objets à restituer.

3. Procédé de restitution selon l'une quelconque des revendications 1 et 2, **caractérisé en ce que** ladite étape de distribution comprend une étape de lecture d'une première étiquette, pour chacun desdits objets, pouvant prendre une première valeur si l'objet doit être placé dans ledit sous-arbre des objets à restituer, et une seconde valeur, si l'objet doit être placé dans ledit sous-arbre d'attente.

4. Procédé de restitution selon l'une quelconque des revendications 1 à 3, **caractérisé en ce que** ladite étape de contrôle comprend une étape de lecture d'une deuxième étiquette de localisation, pouvant prendre une première valeur si au moins un des ascendants dudit objet est placé dans ledit sous-arbre d'attente.

5. Procédé de restitution selon l'une quelconque des revendications 1 à 4, **caractérisé en ce que** ladite étape de transfert comprend une étape de détection d'un événement générateur appartenant au groupe comprenant :
- un instant ou un délai prédéterminé ;
- une action effectuée par un utilisateur ;
- une commande envoyée par un serveur ;
- un événement lié au fonctionnement dudit terminal,
ou une combinaison de ces événements.

6. Terminal de radiocommunication mobile apte à restituer une scène multimédia, ladite scène multimédia comprenant une pluralité d'objets multimédia organisés sous la forme d'au moins un arbre de description de scène, **caractérisé en ce qu'**il comprend :
- des moyens de distribution desdits objets entre deux sous-arbres, un sous-arbre des objets à restituer, comprenant des objets destinés à être restitués à un instant donné, et un sous-arbre d'attente, comprenant des objets destinés à ne pas être restitués audit un instant donné ;
- des moyens de transfert d'au moins un desdits objets d'un premier desdits sous-arbres au second desdits sous-arbres en fonction d'au moins une condition de transfert prédéterminée ;
- des moyens de reconstruction de ladite scène à un instant donné, utilisant uniquement les objets présents dans ledit sous-arbre des objets à restituer.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre des étapes du procédé de restitution d'au moins une scène multimédia sur un terminal de radiocommunication mobile, ladite scène multimédia comprenant une pluralité d'objets multimédia organisés sous la forme d'au moins un arbre de description de scène, selon l'une quelconque des revendications 1 à 5.
